# EUROPEAN PATENT APPLICATION

(11) **EP 4 848 079 A1**
(43) Date of publication of application: **02.12.2026**
(21) Application number: 24923296.8
(22) Date of filing: 05.09.2024
(51) Int. Cl.: G06F 9/30

(54) **COMPILATION METHOD, MEMORY OPERATION DETECTION METHOD, AND RELATED DEVICE**

(30) Priority: 08.02.2024 CN 202410179636
(71) Applicant: Huawei Technologies Co., Ltd., Shenzhen, Guangdong 518129 (CN)
(72) Inventor: DU, Chunming, Shenzhen Guangdong 518129 (CN); ZHAO, Peng, Shenzhen Guangdong 518129 (CN); LIAN, Bin, Shenzhen Guangdong 518129 (CN); CHENG, Chen, Shenzhen Guangdong 518129 (CN)
(74) Representative: Körber, Martin Hans
(86) International application number: PCT/CN2024/117009
(87) International publication number: WO 2025/167086

(57) **Abstract**

A compilation method and a memory operation detection method are provided, to implement detection of an unauthorized memory operation. In this solution, memory operation instructions in code are identified in a compilation process of the code, and corresponding stub functions are inserted into the code for the memory operation instructions, so that memory operations performed by using the memory operation instructions in the code during running are captured by using the stub functions and stored in first storage space in a form of memory operation parameters. In this way, after running of the code is completed, the memory operations performed in a running process of the code may be restored based on the stored memory operation parameters, to implement detection of an unauthorized memory operation. In this solution, only parameter information related to the memory operations is captured when the memory operations are captured, and no additional memory space needs to be allocated to implement real-time detection. Therefore, no additional occupation is caused to a limited memory space, thereby reducing an amount of memory space occupied by memory detection.

## Description

This application claims priority to Chinese Patent Application No. 202410179636.0, filed with the China National Intellectual Property Administration on February 8, 2024 and entitled "COMPILATION METHOD, MEMORY OPERATION DETECTION METHOD, AND RELATED APPARATUS", which is incorporated herein by reference in its entirety.

### TECHNICAL FIELD

This application relates to the field of computer technologies, and in particular, to a compilation method, a memory operation detection method, and a related apparatus.

### BACKGROUND

The application of artificial intelligence (Artificial Intelligence, AI) raises a huge demand for heterogeneous platforms. More chip vendors start to engage in heterogeneous platforms. The heterogeneous platform is usually a computing platform deployed with a central processing unit (Central Processing Unit, CPU) and an AI domain special architecture (Domain Special Architecture, DSA). On the heterogeneous platform, usually, the CPU completes a conventional logical operation, and the AI DSA completes a dedicated AI operation.

A memory operation detection technology is a necessary debugging means in the computer field. In addition, on the heterogeneous platform, memory operations performed by the AI DSA need to be detected to determine some unauthorized memory operations that occur in a running process of the AI DSA. Currently, a manner of detecting an unauthorized memory operation on a heterogeneous platform is allocating shadow memory for detecting authority of a memory operation in addition to allocating memory for an operation object, to detect authority of a memory operation in real time based on the shadow memory. A size of the shadow memory is in fixed proportion to a size of the memory allocated to the operation object. For example, each time 8-byte memory is allocated to the operation object, 1-byte shadow memory needs to be allocated.

In the existing memory operation detection manner, shadow memory needs to be additionally allocated to detect authority of a memory operation, and a size of the shadow memory is positively correlated with a size of memory used for an actual operation. Therefore, a large amount of memory is additionally occupied in a running process of the heterogeneous platform. As a result, memory space that can be actually used to perform an AI operation on the heterogeneous platform is greatly reduced, affecting efficiency of performing an AI operation on the heterogeneous platform.

### SUMMARY

This application provides a compilation method and a memory operation detection method, to obtain, through compilation, an executable file that facilitates memory operation detection, and implement memory operation detection without causing additional occupation to a limited memory space, thereby reducing an amount of memory space occupied by memory detection.

A first aspect of this application provides a compilation method, including the following: First code is obtained. The first code includes a plurality of memory operation instructions. The first code is to-be-compiled code, for example, source code or intermediate code obtained after the source code is initially compiled.

Then, a plurality of stub functions are inserted into the first code based on locations of the plurality of memory operation instructions in the first code to obtain second code. The plurality of stub functions correspond to the plurality of memory operation instructions, the plurality of stub functions are used to capture memory operations performed by using the plurality of memory operation instructions and store a plurality of captured memory operation parameters in first storage space, and the plurality of memory operation parameters are used to restore the operations performed by using the plurality of memory operation instructions. The memory operation performed by using the memory operation instruction is an operation performed on memory, for example, a memory allocation or memory read/write operation. In addition, the first storage space may be storage space with a relatively large capacity and relatively low costs, without a need to use high-speed storage space with a relatively small capacity to store the memory operation parameters, to ensure that storage of the captured memory operation parameters does not occupy high-speed storage space used for program running.

In this solution, the memory operation instructions in the code are identified in a compilation process of the code, and the corresponding stub functions are inserted into the code for the memory operation instructions, so that the memory operations performed by using the memory operation instructions in the code during running are captured by using the stub functions and stored in the first storage space in a form of the memory operation parameters. In this way, after running of the code is completed, the memory operations performed in a running process of the code may be restored based on the stored memory operation parameters, to implement detection of an unauthorized memory operation. In this solution, only parameter information related to the memory operations is captured when the memory operations are captured, and no additional memory space needs to be allocated to implement real-time detection. Therefore, no additional occupation is caused to a limited memory space, thereby reducing an amount of memory space occupied by memory detection.

In a possible implementation, the plurality of memory operation instructions include instructions of one or more of the following types: a memory allocation instruction, a memory copy instruction, a memory access instruction, or a memory release instruction. Each of the plurality of memory operation instructions uniquely corresponds to a memory operation type. Different memory operation instructions in the plurality of memory operation instructions may correspond to a same memory operation type, or may correspond to different memory operation types, so that the plurality of memory operation instructions may include instructions of one or more of the foregoing different types.

In a possible implementation, each of the plurality of memory operation parameters includes a destination address of a memory operation and a type of the memory operation.

In this solution, several simple parameters, namely, the type of the memory operation and the address of the memory operation, are indicated in the memory operation parameter, so that the memory operation can be well described, to subsequently complete restoration of the memory operation based on the memory operation parameter, and ensure that the captured memory operation parameter needs to occupy only a small amount of storage space, without occupation of a large amount of memory space due to memory operation detection.

In a possible implementation, target memory operation parameters in the plurality of memory operation parameters further include execution time of memory operations, the memory operations indicated by the target memory operation parameters are operations performed on shared memory, the shared memory is memory accessible to different processing cores, and different storage space is allocated to the different processing cores in the shared memory.

In this solution, in order to record a sequence in which processing cores perform memory operations on the shared memory, to determine whether a memory corruption behavior between processing cores occurs in the shared memory, execution time of the memory operations for the shared memory may be recorded in target memory operation parameters, to determine memory operation time of each processing core for the shared memory.

In a possible implementation, before the stub functions are inserted into the first code, a capture instruction list may be first obtained. The capture instruction list indicates types of memory operation instructions for which stub functions need to be inserted and stub function insertion locations. That is, the capture instruction list is equivalent to a rule file used to instruct a compiler to insert stub functions, and the capture instruction list indicates specific instructions for which stub functions need to be inserted and content and insertion locations of the stub functions that need to be inserted.

Then, the plurality of memory operation instructions in the first code are identified based on the capture instruction list. Next, a corresponding stub function is inserted into the first code for each memory operation instruction based on the stub function insertion locations indicated by the capture instruction list and a location of each of the plurality of memory operation instructions in the first code. An insertion location of the stub function corresponding to each memory operation instruction may be a front location of the memory operation instruction, or may be a rear location of the memory operation instruction.

In this solution, the capture instruction list is provided to instruct the compiler to identify the memory operation instructions in the code and insert the corresponding stub functions for the memory operation instructions, so that the compiler can insert the stub functions into the code in the compilation process without a great change in the existing compiler, thereby improving implementability of the solution.

In a possible implementation, the second code is used to obtain, through compilation, an executable file that is run on an AI DSA of a heterogeneous platform, and the heterogeneous platform includes a CPU and the AI DSA.

In a possible implementation, the AI DSA includes one or more types of the following hardware: a graphics processing unit (Graphics Processing Unit, GPU), a neural network processing unit (Neural network Processing Unit, NPU), or a field programmable gate array (Field Programmable Gate Array, FPGA).

A second aspect of this application provides a memory operation detection method, including the following: A plurality of memory operation parameters are obtained. Each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file.

Then, the memory operations performed by using the plurality of memory operation instructions are sequentially restored in an execution sequence of the plurality of memory operation instructions based on the plurality of memory operation parameters, to detect an unauthorized memory operation that occurs in execution processes of the plurality of memory operation instructions. For example, for an address, if an access operation for the address occurs before the address is allocated, it indicates that an unauthorized memory operation whose type is unrequested access occurs.

This application provides the memory operation detection method. The memory operation parameters corresponding to the memory operations performed by using the memory operation instructions are captured by using the stub functions in the executable file, so that the memory operations performed by using the memory operation instructions may be restored based on the memory operation parameters after execution of the executable file is completed, to offline detect an unauthorized memory operation that occurs in the execution processes of the memory operation instructions. In this solution, only the memory operation parameters are collected during program running, and instead of performing real-time detection, offline analysis is performed based on the memory operation parameters after program running ends. Therefore, no additional memory space needs to be allocated to implement real-time detection, thereby reducing an amount of memory space occupied by memory detection, and avoiding additional occupation of a computational power resource due to real-time memory detection.

In a possible implementation, the plurality of memory operation instructions include instructions of one or more of the following types: a memory allocation instruction, a memory copy instruction, a memory access instruction, or a memory release instruction.

In a possible implementation, the plurality of memory operation parameters include destination addresses of the memory operations and types of the memory operations.

In a possible implementation, the plurality of memory operation parameters include memory operation parameters generated by different processing cores, and the memory operation parameters generated by the different processing cores are stored in different storage areas.

Target memory operation parameters in the plurality of memory operation parameters further include execution time of memory operations, the memory operations indicated by the target memory operation parameters are operations performed on shared memory, the shared memory is memory accessible to different processing cores, different storage space is allocated to the different processing cores in the shared memory, and the execution time of the memory operations is used to determine a memory operation restoration sequence of the target memory operation parameters.

Memory operation parameters generated by different processing cores are stored in different storage space, so that an execution sequence of memory operations performed by a same processing core can be determined based on a storage sequence of memory operation parameters in same storage space. However, for memory operations performed by different processing cores on the shared memory, an execution sequence of these memory operations for the shared memory cannot be determined based on a storage sequence of memory operation parameters. Therefore, in this solution, when processing cores perform memory operations on the shared memory, execution time of the memory operations may be recorded in generated target memory operation parameters, to determine a sequence of the memory operations performed by all the processing cores on the shared memory.

In a possible implementation, it is assumed that the plurality of memory operation parameters include a first memory operation parameter, and the first memory operation parameter is any one of the plurality of memory operation parameters. Second memory space may be determined based on first memory space indicated by the first memory operation parameter. The first memory space is an operation object of a memory operation indicated by the first memory operation parameter, that is, the first memory space is memory space determined based on a destination address indicated in the first memory operation parameter. The second memory space is a new piece of memory space allocated for the first memory space, the second memory space has a correspondence with the first memory space, and the second memory space is used to record a use status of the first memory space.

Then, the use status recorded in the second memory space is updated based on a type of the memory operation indicated by the first memory operation parameter. Any memory space may be represented by four states: an unallocated state, an allocated but uninitialized state, an allocated and initialized state, and an error state.

In addition, before the use status recorded in the second memory space is updated, an unauthorized operation notification is generated if the memory operation indicated by the first memory operation parameter and the use status recorded in the second memory space meet a preset condition. The unauthorized operation notification indicates that the memory operation indicated by the first memory operation parameter is an unauthorized memory operation.

In this solution, a new piece of allocated memory space is used to represent memory space used during execution of the executable file, and a memory operation is restored in the new allocated memory space based on a memory operation parameter, to continuously update a use status of the memory space. In this way, it may be determined, based on the use status of the memory space and the memory operation for the memory space, whether an unauthorized memory operation exists, to complete detection of an unauthorized memory operation.

In a possible implementation, if the memory operation indicated by the first memory operation parameter is a memory access operation and the use status recorded in the second memory space is an unallocated state or an error state, an unauthorized operation notification indicating that a type of an unauthorized memory operation is unrequested access is generated. That is, for memory space in an unallocated state or an error state, if a memory operation is a memory access operation, it may be considered that the memory operation is an unauthorized memory operation, and a type of the unauthorized memory operation is unrequested access.

Alternatively, if the memory operation indicated by the first memory operation parameter is a memory access operation and a use status recorded in a part of the second memory space is an unallocated state, an unauthorized operation notification indicating that a type of an unauthorized memory operation is out-of-bounds memory access is generated.

In a possible implementation, if the memory operation indicated by the first memory operation parameter is a write operation of a first processing core for the shared memory and the use status in the second memory space is recorded based on a write operation of a second processing core for the shared memory, an unauthorized operation notification indicating that a type of an unauthorized memory operation is inter-core corruption is generated.

In this solution, for memory space belonging to the shared memory, it can be determined, based on a use status recorded in corresponding memory space and information about a processing core that triggers recording of the use status, whether an unauthorized memory operation that is inter-core corruption exists in the actually used shared memory, to implement detection of a memory operation on the shared memory, thereby improving implementability of the solution.

In a possible implementation, the first memory space is memory space used by an AI DSA of a heterogeneous platform, and the second memory space is memory space used by a CPU of the heterogeneous platform.

In a possible implementation, after execution of the executable file is completed, the plurality of memory operation parameters may be read from first storage space used by the AI DSA of the heterogeneous platform. The plurality of memory operation parameters are generated and stored in the first storage space by the AI DSA during running of the executable file.

A third aspect of this application provides a compilation apparatus, including: an obtaining module, configured to obtain first code, where the first code includes a plurality of memory operation instructions; and a processing module, configured to insert a plurality of stub functions into the first code based on locations of the plurality of memory operation instructions in the first code to obtain second code, where the plurality of stub functions are used to capture memory operations performed by using the plurality of memory operation instructions and store a plurality of captured memory operation parameters in first storage space, and the plurality of memory operation parameters are used to restore the memory operations performed by using the plurality of memory operation instructions.

In a possible implementation, the plurality of memory operation instructions include instructions of one or more of the following types: a memory allocation instruction, a memory copy instruction, a memory access instruction, or a memory release instruction.

In a possible implementation, the plurality of memory operation parameters include destination addresses of the memory operations and types of the memory operations.

In a possible implementation, target memory operation parameters in the plurality of memory operation parameters further include execution time of memory operations, the memory operations indicated by the target memory operation parameters are operations performed on shared memory, the shared memory is memory accessible to different processing cores, and different storage space is allocated to the different processing cores in the shared memory.

In a possible implementation, the obtaining module is further configured to obtain a capture instruction list, where the capture instruction list indicates types of memory operation instructions for which stub functions need to be inserted and stub function insertion locations; the processing module is further configured to identify the plurality of memory operation instructions in the first code based on the capture instruction list; and the processing module is further configured to insert a corresponding stub function into the first code for each memory operation instruction based on the stub function insertion locations indicated by the capture instruction list and a location of each of the plurality of memory operation instructions in the first code.

In a possible implementation, the second code is used to obtain, through compilation, an executable file that is run on an AI DSA of a heterogeneous platform, and the heterogeneous platform includes a central processing unit CPU and the AI DSA.

In a possible implementation, the AI DSA includes one or more types of the following hardware: a GPU, an NPU, or an FPGA.

A fourth aspect of this application provides a memory operation detection apparatus, including: an obtaining module, configured to obtain a plurality of memory operation parameters, where each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file; and sequentially restore, in an execution sequence of the plurality of memory operation instructions based on the plurality of memory operation parameters, the memory operations performed by using the plurality of memory operation instructions, to detect an unauthorized memory operation that occurs in execution processes of the plurality of memory operation instructions.

In a possible implementation, the plurality of memory operation instructions include instructions of one or more of the following types: a memory allocation instruction, a memory copy instruction, a memory access instruction, or a memory release instruction.

In a possible implementation, the plurality of memory operation parameters include destination addresses of the memory operations and types of the memory operations.

In a possible implementation, the plurality of memory operation parameters include memory operation parameters generated by different processing cores, and the memory operation parameters generated by the different processing cores are stored in different storage areas. Target memory operation parameters in the plurality of memory operation parameters further include execution time of memory operations, the memory operations indicated by the target memory operation parameters are operations performed on shared memory, the shared memory is memory accessible to different processing cores, different storage space is allocated to the different processing cores in the shared memory, and the execution time of the memory operations is used to determine a memory operation restoration sequence of the target memory operation parameters.

In a possible implementation, the processing module is further configured to: determine second memory space based on first memory space indicated by a first memory operation parameter, where the first memory operation parameter is any one of the plurality of memory operation parameters, the first memory space is an operation object of a memory operation indicated by the first memory operation parameter, the second memory space has a correspondence with the first memory space, and the second memory space is used to record a use status of the first memory space; update, based on a type of the memory operation indicated by the first memory operation parameter, the use status recorded in the second memory space; and before updating the use status recorded in the second memory space, generate an unauthorized operation notification if the memory operation indicated by the first memory operation parameter and the use status recorded in the second memory space meet a preset condition, where the unauthorized operation notification indicates that the memory operation indicated by the first memory operation parameter is an unauthorized memory operation.

In a possible implementation, the processing module is further configured to: if the memory operation indicated by the first memory operation parameter is a memory access operation and the use status recorded in the second memory space is an unallocated state or an error state, generate an unauthorized operation notification indicating that a type of an unauthorized memory operation is unrequested access; or if the memory operation indicated by the first memory operation parameter is a memory access operation and a use status recorded in a part of the second memory space is an unallocated state, generate an unauthorized operation notification indicating that a type of an unauthorized memory operation is out-of-bounds memory access.

In a possible implementation, the processing module is further configured to: if the memory operation indicated by the first memory operation parameter is a write operation of a first processing core for the shared memory and the use status in the second memory space is recorded based on a write operation of a second processing core for the shared memory, generate an unauthorized operation notification indicating that a type of an unauthorized memory operation is inter-core corruption.

In a possible implementation, the first memory space is memory space used by an AI DSA of a heterogeneous platform, and the second memory space is memory space used by a CPU of the heterogeneous platform.

In a possible implementation, the obtaining module is further configured to: after execution of the executable file is completed, read the plurality of memory operation parameters from first storage space used by the AI DSA of the heterogeneous platform, where the plurality of memory operation parameters are generated and stored in the first storage space by the AI DSA during running of the executable file.

A fifth aspect of this application provides a compilation apparatus. The apparatus may include a processor, the processor is coupled to a storage, the storage stores program instructions, and when the program instructions stored in the storage are executed by the processor, the method according to any one of the first aspect or the implementations of the first aspect is implemented. For details of performing, by the processor, the steps in the possible implementations of the first aspect, refer to the first aspect. Details are not described herein again.

A sixth aspect of this application provides a memory operation detection apparatus. The apparatus may include a processor, the processor is coupled to a storage, the storage stores program instructions, and when the program instructions stored in the storage are executed by the processor, the method according to any one of the second aspect or the implementations of the second aspect is implemented. For details of performing, by the processor, the steps in the possible implementations of the first aspect, refer to the second aspect. Details are not described herein again.

A seventh aspect of this application provides a computer-readable storage medium. The computer-readable storage medium stores a computer program. When the computer program is run on a computer, the computer is enabled to perform the method according to any implementation of the first aspect or the second aspect.

An eighth aspect of this application provides a circuit system. The circuit system includes a processing circuit, and the processing circuit is configured to perform the method according to any implementation of the first aspect or the second aspect.

A ninth aspect of this application provides a computer program product. When the computer program product is run on a computer, the computer is enabled to perform the method according to any implementation of the first aspect or the second aspect.

A tenth aspect of this application provides a chip system. The chip system includes a processor, configured to support an electronic device in implementing the function in any implementation of the first aspect or the second aspect, for example, processing data and/or information in the foregoing method. In a possible design, the chip system further includes a storage. The storage is configured to store program instructions and data that are necessary for the electronic device. The chip system may include a chip, or may include a chip and another discrete component.

For beneficial effects of the third aspect to the tenth aspect, refer to the descriptions of the first aspect and the second aspect. Details are not described herein again.

### BRIEF DESCRIPTION OF DRAWINGS

FIG. 1 is a diagram of a mapping relationship between shadow memory and conventional memory according to an embodiment of this application;
FIG. 2 is a diagram of an application scenario according to an embodiment of this application;
FIG. 3 is a schematic flowchart of performing a compilation method according to an embodiment of this application;
FIG. 4 is a schematic flowchart of a memory operation detection method according to an embodiment of this application;
FIG. 5 is a schematic flowchart of a core method according to an embodiment of this application;
FIG. 6 is a diagram of a system architecture according to an embodiment of this application;
FIG. 7 is a diagram of a heterogeneous platform according to an embodiment of this application;
FIG. 8 is a diagram of a parameter storage area according to an embodiment of this application;
FIG. 9 is a diagram of memory analysis according to an embodiment of this application;
FIG. 10 is a diagram of a structure of a compilation apparatus according to an embodiment of this application;
FIG. 11 is a diagram of a structure of a memory operation detection apparatus according to an embodiment of this application;
FIG. 12 is a diagram of a structure of an execution device according to an embodiment of this application; and
FIG. 13 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms such as "first" and "second" are intended to distinguish between similar objects but are not necessarily intended to describe a specific order or sequence. It should be understood that the descriptions termed in such a manner are interchangeable in appropriate cases, so that embodiments can be implemented in an order other than the order of the content illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during implementation in actual applications. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms in embodiments of this application.

### (1) Heterogeneous platform

The heterogeneous platform is usually a computing platform deployed with a CPU and an AI DSA. The AI DSA is usually a processor specially used to process an AI operation, for example, a graphics processing unit (Graphics Processing Unit, GPU), a neural network processing unit (Neural network Processing Unit, NPU), or a field programmable gate array (Field Programmable Gate Array, FPGA). Usually, the heterogeneous platform may also be referred to as a platform deployed with CPU + xPU.

### (2) Compilation, compile (compilation, compile)

Compilation is a process of converting source code into an executable file by using a compiler. Simply speaking, compilation is converting source code written in a high-level language into a binary language that can be recognized by a computer. Because the computer recognizes only 1 and 0, the compiler actually converts a human-familiar language into a binary language.

Usually, a working process in which a compiler translates source code into an executable file is divided into five phases: lexical analysis; syntax analysis; semantic analysis and intermediate code generation; code optimization; and object code generation.

### (3) Source code

The source code is a text file that is not compiled and that is written according to a specific program design language specification, and is a series of human-readable computer language instructions. In modern programming languages, the source code may appear in a form of a book or a tape. However, a most commonly used format is a text file, and an objective of the typical format is to compile a computer program. An ultimate objective of the computer source code is to translate a human-readable text into binary instructions that can be executed by a computer. This process is referred to as compilation, completed by a compiler.

### (4) Executable file

The executable file is a file that can be directly run on a computer.

### (5) AI model

The AI model is a mathematical model that learns and predicts data with specific regularity and predictability. Currently, the AI model usually includes a neural network. In a running process of the AI model, a computing process of learning data is referred to as training, and result prediction performed on input data is referred to as inference.

### (6) Operator

The operator is a basic compute unit of an AI model. Each operator represents specific computing semantics. Some common computing semantics represented by operators includes, for example, a convolution operation, a pooling operation, and an activation function operation.

### (7) Kernel function

The kernel function is an execution entity of an operator during running, that is, the kernel function is actually binary instruction code that can be directly executed by device hardware.

### (8) Bytecode

The bytecode is a binary file that contains an executable program and includes a sequence of op code/data pairs. Compared with machine instruction code that can be directly executed by hardware, the bytecode is actually intermediate code, namely, instruction code that needs to be interpreted and executed by using software code, and cannot be directly executed by hardware.

### (9) Machine instruction (Machine Instructions)

The machine instruction is an instruction that can be directly identified and executed by computer hardware (for example, a central processing unit (Central Processing Unit, CPU)), and is represented in a form of binary code. The machine instruction usually includes two parts: operation code and operand. The operation code indicates an operation to be completed by using the machine instruction, namely, a function of the machine instruction. The operand indicates an object participating in an operation, a location at which an operation result is stored, and the like.

### (10) Global memory

The global memory is memory space used to store a global variable and a static variable in device hardware (for example, a GPU). The variables stored in the global memory are accessible and modifiable to all objects running in the device hardware. That is, the global memory is shared by a plurality of cores, and is accessible to all processing cores in the device hardware and is also accessible to host hardware.

### (11) Local memory

The local memory is private memory space allocated to each processing core in device hardware, and is accessible to only the corresponding processor core and is inaccessible to another processor core.

### (12) Instrumentation

Instrumentation is inserting some probes into a program on a basis of ensuring integrity of original logic of the tested program. The probe is essentially a code segment for collecting information, and may be an assignment statement or a function call for collecting coverage information. Feature data regarding program running can be thrown through execution of the probes. In this way, control flow and data flow information of the program can be obtained by analyzing the feature data regarding program running, to obtain dynamic information such as logic coverage, so as to implement a test objective.

Currently, a manner of detecting an unauthorized memory operation on a heterogeneous platform is allocating shadow memory for detecting authority of a memory operation in addition to allocating memory for an operation object, to detect authority of a memory operation in real time based on the shadow memory. Operations performed on the memory allocated to the operation object are all written to the shadow memory. In this way, before each time the memory allocated to the operation object is accessed, the shadow memory is read to determine whether the memory access is authorized, to implement detection of a memory operation.

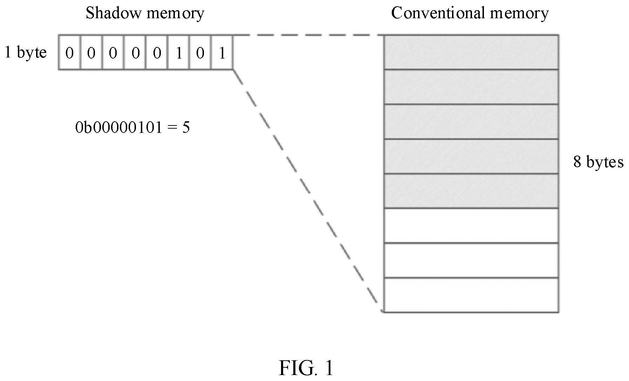

For example, FIG. 1 is a diagram of a mapping relationship between shadow memory and conventional memory according to an embodiment of this application. As shown in FIG. 1, a size of the shadow memory is in fixed proportion to a size of the conventional memory allocated to the operation object. Specifically, each time 8-byte conventional memory is allocated to the operation object, 1-byte shadow memory needs to be allocated to record availability of the 8-byte conventional memory. In addition, the shadow memory cannot be directly read/written by a user, and needs to be accessed by generating related code by a compiler.

Each allocation operation or release operation for the conventional memory is written to the shadow memory. Before each time of reading/writing conventional memory, the shadow memory needs to be read to obtain access authority of this block of conventional memory (whether the conventional memory is allocated or released).

Specifically, a method for calculating an address of the shadow memory is: dividing an address of the conventional memory by 8 and then adding an offset. Because stacks are at both ends of virtual memory address space, the shadow memory falls in the middle. If another user accesses the shadow memory, "shadow memory" of the shadow memory falls in an unauthorized range. Some access problems can be known by determining authority of a value recorded in the shadow memory.

However, in this manner of detecting an unauthorized memory operation, a value in shadow memory needs to be calculated in real time in a running process, and therefore a specific processor resource is occupied, causing a reduction in execution efficiency of an original program. In addition, because of existence of the shadow memory, an additional block of memory is occupied, so that memory that can be allocated to the original program for use is reduced, causing a reduction in a computing scale of the original program. However, AI computing is very sensitive to a computing scale and performance. Therefore, in the existing manner of detecting an unauthorized memory operation, running efficiency of AI computing is reduced.

Based on this, embodiments provide a compilation method and a memory operation detection method. Memory operation instructions in code are identified in a compilation process of the code, and corresponding stub functions are inserted into the code for the memory operation instructions, so that memory operations performed by using the memory operation instructions in the code during running are captured by using the stub functions and stored in first storage space in a form of memory operation parameters. In this way, after running of the code is completed, the memory operations performed in a running process of the code may be restored based on the stored memory operation parameters, to implement detection of an unauthorized memory operation. In this solution, only parameter information related to the memory operations is captured when the memory operations are captured, and no additional memory space needs to be allocated to implement real-time detection. Therefore, no additional occupation is caused to a limited memory space, thereby reducing an amount of memory space occupied by memory detection.

In addition, in this solution, only the memory operation parameters are collected during program running, and instead of performing real-time detection, offline analysis is performed based on the memory operation parameters after program running ends. Therefore, no additional memory space needs to be allocated to implement real-time detection, thereby reducing an amount of memory space occupied by memory detection, and avoiding additional occupation of a computational power resource due to real-time memory detection. Ultimately, this effectively improves a computing scale and performance of AI computing.

For ease of understanding, the following first describes a system architecture to which the compilation method and the memory operation detection method provided in embodiments of this application are applied.

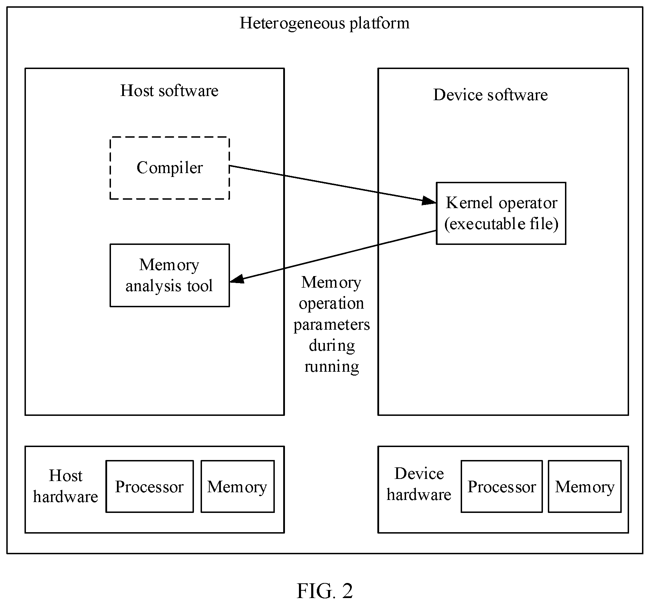

FIG. 2 is a diagram of an application scenario according to an embodiment of this application. As shown in FIG. 2, a system architecture includes a heterogeneous platform. The heterogeneous platform includes host hardware and device hardware. The host hardware includes a CPU and memory used by the CPU. The device hardware includes an AI DSA and memory used by the AI DSA. Host software, such as a compiler and a memory analysis tool, may be run on the host hardware. Alternatively, the compiler may be executed on another device (for example, a compilation dedicated server), in other words, only the memory analysis tool is run on the host hardware of the heterogeneous platform. This is not specifically limited herein.

Device software may be run on the device hardware, and the device software is, for example, an executable file obtained through compilation by using the compiler based on the compilation method provided in embodiments. The executable file is, for example, a kernel operator in the AI domain, and needs to be run by using the AI DSA.

In a process of compiling source code by using the compiler, first, the source code may be converted into intermediate code, and memory operation instructions in the intermediate code may be identified, so that corresponding stub functions are inserted into the intermediate code for the memory operation instructions. Then, the intermediate code may be further compiled to obtain a kernel operator. The kernel operator is essentially an executable file.

The kernel operator is transferred to the device hardware for running. When the device hardware runs the kernel operator and performs memory operations, the device hardware captures, based on indications of the stub functions in the kernel operator, the memory operations performed by the device hardware, and stores captured memory operation parameters. In this way, after running of the kernel operator is completed, the memory analysis tool that is run on the host hardware may obtain the memory operation parameters from the device hardware, and restore, based on the memory operation parameters, the memory operations performed by the device hardware during running of the kernel operator, to implement detection of an unauthorized memory operation.

The foregoing describes the system architecture to which the methods provided in embodiments are applied. The following describes in detail the compilation method and the memory operation detection method provided in embodiments.

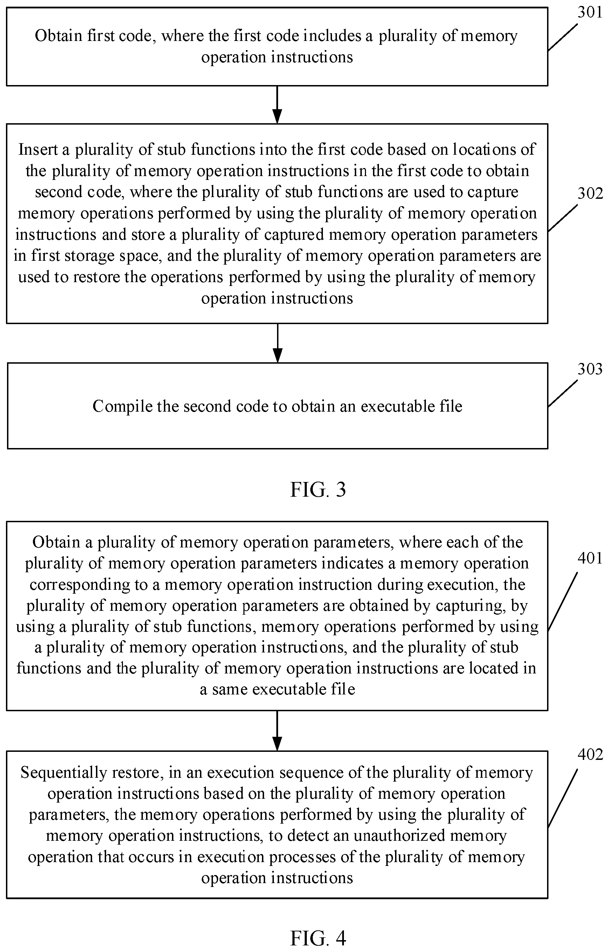

FIG. 3 is a schematic flowchart of performing a compilation method according to an embodiment of this application. As shown in FIG. 3, the compilation method provided in this embodiment includes the following steps 301 to 303.

Step 301. Obtain first code, where the first code includes a plurality of memory operation instructions.

In this embodiment, the compilation method is performed by, for example, a compiler. The first code is to-be-compiled code, for example, source code or intermediate code obtained after the source code is initially compiled. An example in which the first code is intermediate code is used below to describe the compilation method provided in this embodiment.

For the plurality of memory operation instructions in the first code, the plurality of memory operation instructions may include instructions of one or more of the following types: a memory allocation instruction, a memory copy instruction, a memory access instruction, or a memory release instruction. Specifically, each of the plurality of memory operation instructions uniquely corresponds to a memory operation type. Different memory operation instructions in the plurality of memory operation instructions may correspond to a same memory operation type, or may correspond to different memory operation types, so that the plurality of memory operation instructions may include instructions of one or more of the foregoing different types.

The memory allocation instruction is an instruction for allocating memory to an operation object. The memory copy instruction is an instruction for migrating data in memory from a source address to a destination address. The memory access instruction is an instruction for performing a read operation or a write operation on memory. The memory release instruction is an instruction for releasing memory space.

Step 302. Insert a plurality of stub functions into the first code based on locations of the plurality of memory operation instructions in the first code to obtain second code, where the plurality of stub functions are used to capture memory operations performed by using the plurality of memory operation instructions and store a plurality of captured memory operation parameters in first storage space, and the plurality of memory operation parameters are used to restore the operations performed by using the plurality of memory operation instructions.

In this embodiment, in a process of compiling the first code, the memory operation instructions in the first code may be identified, to identify the plurality of memory operation instructions in the first code and determine a location of each memory operation instruction in the first code. Based on the location of each memory operation instruction in the first code, a corresponding stub function may be inserted into the first code for each first code, to obtain the second code into which the plurality of stub functions are inserted.

The stub functions are used to store the captured memory operation parameters in the first storage space. The first storage space is, for example, storage space in a device that executes an executable file obtained based on the second code through compilation, for example, large-capacity storage space such as memory space or hard disk space. That is, the first storage space may be storage space with a relatively large capacity and relatively low costs, without a need to use high-speed storage space with a relatively small capacity to store the memory operation parameters, to ensure that storage of the captured memory operation parameters does not occupy high-speed storage space used for program running.

Optionally, in order that the compiler can accurately identify memory operation instructions for which stub functions need to be inserted and insert the accurate stub functions for the memory operation instructions, in this embodiment, a capture instruction list may be provided for the compiler to instruct the compiler to perform a compilation process.

For example, before the stub functions are inserted into the first code, the capture instruction list may be first obtained. The capture instruction list indicates types of memory operation instructions for which stub functions need to be inserted, stub function content, and stub function insertion locations. Simply speaking, the capture instruction list is equivalent to a rule file used to instruct the compiler to insert stub functions, and the capture instruction list indicates specific instructions for which stub functions need to be inserted and content and insertion locations of the stub functions that need to be inserted. The capture instruction list may be preset in the compiler or may be provided by a user for the compiler through an external interface (for example, an application programming interface (Application Programming Interface, API)) on the compiler, and is used to instruct the compiler to implement insertion of the stub functions.

Based on the capture instruction list, the compiler may identify the plurality of memory operation instructions in the first code. In addition, the compiler may insert the corresponding stub function into the first code for each memory operation instruction based on the stub function insertion locations indicated by the capture instruction list and the location of each of the plurality of memory operation instructions in the first code to obtain the second code. An insertion location of the stub function corresponding to each memory operation instruction may be a front location of the memory operation instruction, or may be a rear location of the memory operation instruction. That is, the stub function may be inserted in front of the memory operation instruction or behind the memory operation instruction. This may be specifically determined according to an actual code writing status, and is not specifically limited herein.

In this solution, the capture instruction list is provided to instruct the compiler to identify the memory operation instructions in the code and insert the corresponding stub functions for the memory operation instructions, so that the compiler can insert the stub functions into the code in the compilation process without a great change in the existing compiler, thereby improving implementability and universality of the solution.

In addition, for the plurality of stub functions inserted for the plurality of memory operation instructions, each stub function may be used to capture a memory operation performed by using a corresponding memory operation instruction during running, to generate a corresponding memory operation parameter. In this way, for the plurality of memory operation parameters captured by using the plurality of stub functions, each of the plurality of memory operation parameters may include a destination address of the memory operation and a type of the memory operation. For example, for a memory operation parameter corresponding to a memory allocation instruction, the memory operation parameter may indicate that a type of a memory operation is memory allocation and a memory allocation destination address (an address of memory that needs to be allocated) is an address 1.

It should be noted that, when a type of a memory operation is memory copy, a memory operation parameter may further include a source address of the memory operation, namely, a source address of data that needs to be migrated in a memory copy process.

In this solution, several simple parameters, namely, the type of the memory operation and the address of the memory operation, are indicated in the memory operation parameter, so that the memory operation can be well described, to subsequently complete restoration of the memory operation based on the memory operation parameter, and ensure that the captured memory operation parameter needs to occupy only a small amount of storage space, without occupation of a large amount of memory space due to memory operation detection.

Optionally, target memory operation parameters in the plurality of memory operation parameters further include execution time of memory operations. The memory operations indicated by the target memory operation parameters are operations performed on shared memory. The shared memory is memory accessible to different processing cores, and different storage space is allocated to the different processing cores in the shared memory.

Usually, when executing a kernel function, device hardware simultaneously executes the kernel function by using a plurality of processing cores, to improve operation efficiency of the kernel function. For the plurality of processing cores on the device hardware, each processing core has corresponding local memory, namely, private memory space of each processing core, and another processing core cannot access the memory space. The plurality of processing cores further have shared memory, namely, global memory that can be jointly used by the plurality of processing cores. However, for different processing cores, different storage space is usually allocated to the different processing cores in the shared memory, to implement isolation between the processing cores to avoid memory corruption between the processing cores.

Therefore, in order to record a sequence in which processing cores perform memory operations on the shared memory, to determine whether a memory corruption behavior between processing cores occurs in the shared memory, execution time of the memory operations for the shared memory may be recorded in target memory operation parameters, to determine memory operation time of each processing core for the shared memory.

In addition, for a memory operation behavior of a processing core for local memory, memory operation behaviors executed by a same processing core are all executed in sequence, in other words, the same processing core cannot simultaneously execute a plurality of memory operation behaviors. Therefore, in this embodiment, memory operations performed by each processing core for local memory may be recorded in sequence, so that an execution sequence of the memory operations can be determined based on a storage sequence of memory operation parameters, without a need to record execution time of the memory operations performed by the processing core for the local memory, thereby saving storage space.

Step 303. Compile the second code to obtain the executable file.

Because the second code is code obtained after the stub functions are inserted based on the source code or the intermediate code, in this embodiment, the second code may continue to be further compiled according to an existing compilation procedure, to obtain the executable file.

Optionally, the second code may be used to obtain, through compilation, an executable file that is run on an AI DSA of a heterogeneous platform. The heterogeneous platform includes a CPU and the AI DSA. For example, the executable file is specifically a kernel function that is run on the AI DSA.

Optionally, the AI DSA includes one or more types of the following hardware: a GPU, an NPU, or an FPGA.

After the executable file is obtained by compiling the first code based on the foregoing compilation method, the device hardware may run the executable file. For example, on the heterogeneous platform, the CPU allocates an operation task to the AI DSA and transfers an executable file corresponding to the operation task to the AI DSA, and the AI DSA executes the executable file to complete the operation task. When the AI DSA runs the executable file, because the executable file includes the stub function corresponding to each memory operation instruction, the AI DSA runs the stub functions to capture the memory operations performed by the AI DSA during running of the memory operation instructions, and stores the generated memory operation parameters in the first storage space. In this way, after execution of the executable file is completed, the memory operation detection method provided in embodiments may be performed by obtaining the memory operation parameters in the first storage space, to implement detection of an unauthorized memory operation.

FIG. 4 is a schematic flowchart of a memory operation detection method according to an embodiment of this application. As shown in FIG. 4, the memory operation detection method includes the following steps 401 and 402.

Step 401. Obtain a plurality of memory operation parameters, where each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file

Specifically, after the executable file is obtained based on the compilation method in the foregoing embodiment, in a process of running the executable file, the stub functions in the executable file are run, to capture the memory operations performed by using the memory operation instructions in the executable file, and generate the foregoing plurality of memory operation parameters. Therefore, the memory operations in an execution process of the executable file may be obtained by obtaining the plurality of memory operation parameters generated based on the executable file.

For example, after execution of the executable file is completed, a CPU may read the plurality of memory operation parameters from first storage space used by an AI DSA of a heterogeneous platform. The plurality of memory operation parameters are generated and stored in the first storage space by the AI DSA during running of the executable file. That is, on the heterogeneous platform, the AI DSA runs the executable file to execute an operation task, and stores, in the first storage space, the memory operation parameters captured during execution of the operation task. In this way, the CPU of the heterogeneous platform reads the plurality of memory operation parameters in the first storage space to perform the memory operation detection method provided in this embodiment, to implement offline detection of the memory operations during running of the executable file.

Certainly, when the executable file is executed by the CPU, the plurality of memory operation parameters obtained by the CPU by executing the executable file are usually stored in storage space used by the CPU, that is, the first storage space is storage space used by the CPU. In this way, after running of the executable file is completed, the CPU extracts the plurality of memory operation parameters from the first storage space used by the CPU, to perform memory operation detection.

Step 402. Sequentially restore, in an execution sequence of the plurality of memory operation instructions based on the plurality of memory operation parameters, the memory operations performed by using the plurality of memory operation instructions, to detect an unauthorized memory operation that occurs in execution processes of the plurality of memory operation instructions.

In this embodiment, each of the plurality of memory operation parameters includes a destination address of the memory operation and a type of the memory operation. Therefore, based on an execution sequence of each memory operation parameter, the memory operations performed by using the plurality of memory operation instructions can be restored in the execution sequence of the plurality of memory operation instructions, so that the unauthorized memory operation that occurs in the execution processes of the plurality of memory operation instructions can be detected. For example, for an address, if an access operation for the address occurs before the address is allocated, it indicates that an unauthorized memory operation whose type is unrequested access occurs.

Optionally, the foregoing plurality of memory operation parameters include memory operation parameters generated by different processing cores, and the memory operation parameters generated by the different processing cores are stored in different storage areas. Usually, there are a plurality of processing cores in the AI DSA (for example, a GPU), and the AI DSA executes an operation task in parallel by using the plurality of processing cores, thereby improving execution efficiency of the operation task. Therefore, the plurality of processing cores in the AI DSA may usually execute a same executable file, to capture a memory operation performed by each processing core. In this way, different storage areas are allocated to different processing cores in advance, so that memory operation parameters captured by the different processing cores can be stored in the different storage areas. Therefore, based on the storage areas from which the memory operation parameters are obtained, a specific processing core that generates each memory operation parameter may be determined, that is, a processing core identifier corresponding to each memory operation parameter may be determined. In addition, in a storage area corresponding to each processing core, memory operation parameters are stored in a specific sequence, and the storage sequence corresponding to the memory operation parameters represents a generation sequence of the memory operation parameters in the same processing core, and therefore can represent an execution sequence of memory operations.

In addition, target memory operation parameters in the plurality of memory operation parameters further include execution time of memory operations. The memory operations indicated by the target memory operation parameters are operations performed on shared memory, the shared memory is memory accessible to different processing cores, and different storage space is allocated to the different processing cores in the shared memory. In the target memory operation parameters, the execution time of the memory operations is used to determine a memory operation restoration sequence of the target memory operation parameters.

It may be understood that, memory operation parameters generated by different processing cores are stored in different storage space, so that an execution sequence of memory operations performed by a same processing core can be determined based on a storage sequence of memory operation parameters in same storage space. However, for memory operations performed by different processing cores on the shared memory, an execution sequence of these memory operations for the shared memory cannot be determined based on a storage sequence of memory operation parameters. Therefore, in this embodiment, when processing cores perform memory operations on the shared memory, execution time of the memory operations may be recorded in generated target memory operation parameters, to determine a sequence of the memory operations performed by all the processing cores on the shared memory.

In an implementation process, in a compilation process of the executable file, it may be specified, in stub functions in advance, that when memory operations for the shared memory are captured, execution time of the memory operations should be recorded, so that the foregoing target memory operation parameters can be generated when the executable file is subsequently executed. Alternatively, it may be specified that all the stub functions in the executable file need to record execution time of the memory operations, so that all the memory operation parameters carry the execution time of the memory operations.

For ease of understanding, the following describes a process in which the memory operations performed by using the plurality of memory operation instructions are restored to detect the unauthorized memory operation that occurs in the execution processes of the plurality of memory operation instructions.

Specifically, because the process of detecting the unauthorized memory operation is performed after execution of the executable file is completed, in this embodiment, a new piece of memory space may be allocated to restore a memory operation that occurs during execution of the executable file. In addition, the new allocated memory space has a correspondence with memory space used during execution of the executable file, that is, a use status of the memory space used during execution of the executable file is simulated by using the new allocated memory space.

For example, it is assumed that the plurality of memory operation parameters include a first memory operation parameter, and the first memory operation parameter is any one of the plurality of memory operation parameters. Second memory space may be determined based on first memory space indicated by the first memory operation parameter. The first memory space is an operation object of a memory operation indicated by the first memory operation parameter, that is, the first memory space is memory space determined based on a destination address indicated in the first memory operation parameter. The second memory space is a new piece of memory space allocated for the first memory space, the second memory space has a correspondence with the first memory space, and the second memory space is used to record a use status of the first memory space.

Then, the use status recorded in the second memory space may be updated based on a type of the memory operation indicated by the first memory operation parameter. Specifically, any memory space may be represented by four states: an unallocated state, an allocated but uninitialized state, an allocated and initialized state, and an error state. An initial status of each piece of memory space is an unallocated state. If the use status recorded in the second memory space is an unallocated state and the type of the memory operation indicated by the first memory operation parameter is a memory allocation operation, the use status recorded in the second memory space may be updated to an allocated but uninitialized state; or if the use status recorded in the second memory space is an allocated but uninitialized state and the type of the memory operation indicated by the first memory operation parameter is a memory write operation, the use status recorded in the second memory space may be updated to an allocated and initialized state.

It should be noted that, before the use status recorded in the second memory space is updated, an unauthorized operation notification is generated if the memory operation indicated by the first memory operation parameter and the use status recorded in the second memory space meet a preset condition. The unauthorized operation notification indicates that the memory operation indicated by the first memory operation parameter is an unauthorized memory operation.

That is, in this embodiment, for each memory operation parameter, actually, first, a piece of memory space corresponding to each memory operation parameter is found, and a use status recorded in the memory space is determined in the found memory space, to determine whether performing, in the use status, a memory operation indicated by the current memory operation parameter, is authorized. An unauthorized operation notification may be generated if performing, in the use status, the memory operation indicated by the current memory operation parameter, is unauthorized.

It may be understood that, when memory space is in a specific status, if a memory operation that cannot occur in the status of the memory space occurs for the memory space, it may be considered that the memory operation for the memory space is an unauthorized memory operation. Therefore, when the memory operation indicated by the first memory operation parameter and the use status recorded in the second memory space meet the preset condition, it may be considered that the memory operation indicated by the first memory operation parameter is an unauthorized memory operation.

In this solution, a new piece of allocated memory space is used to represent memory space used during execution of the executable file, and a memory operation is restored in the new allocated memory space based on a memory operation parameter, to continuously update a use status of the memory space. In this way, it may be determined, based on the use status of the memory space and the memory operation for the memory space, whether an unauthorized memory operation exists, to complete detection of an unauthorized memory operation.

For example, if the memory operation indicated by the first memory operation parameter is a memory access operation and the use status recorded in the second memory space is an unallocated state or an error state, an unauthorized operation notification indicating that a type of an unauthorized memory operation is unrequested access is generated. That is, for memory space in an unallocated state or an error state, if a memory operation is a memory access operation, it may be considered that the memory operation is an unauthorized memory operation, and a type of the unauthorized memory operation is unrequested access.

Alternatively, if the memory operation indicated by the first memory operation parameter is a memory access operation and a use status recorded in a part of the second memory space is an unallocated state, an unauthorized operation notification indicating that a type of an unauthorized memory operation is out-of-bounds memory access is generated.

Alternatively, if the memory operation indicated by the first memory operation parameter is a memory copy operation or a calculation-type memory access operation (for example, writing data obtained through calculation to memory), start address detection may be performed on the destination address indicated by the first memory operation parameter according to an access alignment requirement of a memory segment; and if the destination address indicated by the first memory operation parameter does not meet the access alignment requirement, an address-unaligned access error is reported. For example, it is assumed that the access alignment requirement of the memory segment is using 32 bytes as a memory segment division basis. In this case, if a start address of the destination address indicated by the first memory operation parameter is not a multiple (for example, 0, 32, or 64) of 32, it may be considered that the access alignment requirement is not met, and therefore an address-unaligned access error is reported.

The foregoing is some possible examples of detecting an unauthorized memory operation. In actual applications, some other unauthorized memory operations may be detected based on a use status of memory space and a memory operation for the memory space. This is not specifically limited herein.

Optionally, in some embodiments, if the memory operation indicated by the first memory operation parameter is a write operation of a first processing core for the shared memory and the use status in the second memory space is recorded based on a write operation of a second processing core for the shared memory, an unauthorized operation notification indicating that a type of an unauthorized memory operation is inter-core corruption is generated.

That is, for memory space in the shared memory, if data has been written to the memory space by a processing core, and data is further subsequently written to the memory space by another processing core, it indicates that an unauthorized memory operation that is inter-core corruption exists in the memory space.

In this embodiment, for memory space belonging to the shared memory, it can be determined, based on a use status recorded in corresponding memory space and information about a processing core that triggers recording of the use status, whether an unauthorized memory operation that is inter-core corruption exists in the actually used shared memory, to implement detection of a memory operation on the shared memory, thereby improving implementability of the solution.

Optionally, if the first memory space is, for example, memory space used by the AI DSA of the heterogeneous platform, the second memory space is memory space used by the CPU of the heterogeneous platform. That is, for memory space used by the AI DSA during execution of the executable file, corresponding memory space may be established on a CPU side, to establish a mapping relationship between memory space used to restore an unauthorized memory operation and actually operated memory space, thereby ensuring that offline detection of an unauthorized memory operation can be implemented based on another piece of memory space after execution of the executable file is completed.

For ease of understanding, the following describes, in detail with reference to a specific example, a joint execution process of the compilation method and the memory operation detection method provided in embodiments.

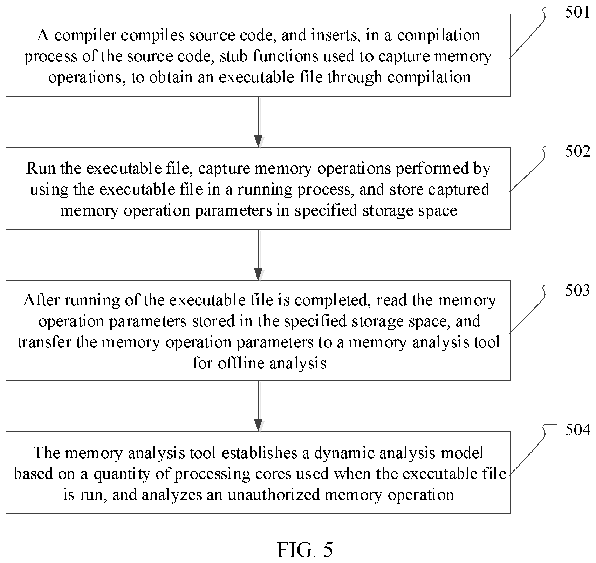

FIG. 5 is a schematic flowchart of a core method according to an embodiment of this application. As shown in FIG. 5, the core method provided in this embodiment includes the following steps 501 to 504.

Step 501. A compiler compiles source code, and inserts, in a compilation process of the source code, stub functions used to capture memory operations, to obtain an executable file through compilation.

In this embodiment, the source code may be compiled into intermediate code, then the stub functions used to capture the memory operations may be inserted into the intermediate code, and finally the intermediate code may be compiled to obtain the executable file. In this embodiment, alternatively, the stub functions may be directly inserted into the source code, and finally the executable file may be obtained through compilation.

Step 502. Run the executable file, capture memory operations performed by using the executable file in a running process, and store captured memory operation parameters in specified storage space.

Because the executable file includes both memory operation instructions and the stub functions, when the executable file is run, the memory operation instructions and the stub functions in the executable file are correspondingly executed, to capture the memory operations performed by using the executable file in the running process. In addition, the captured memory operation parameters are stored in the specified storage space (the foregoing first storage space), for example, memory space or hard disk space used by an AI DSA.

Step 503. After running of the executable file is completed, read the memory operation parameters stored in the specified storage space, and transfer the memory operation parameters to a memory analysis tool for offline analysis.

For example, the executable file may be executed by the AI DSA of a heterogeneous platform, and a CPU of the heterogeneous platform may read the memory operation parameters from the specified storage space after the AI DSA completes execution of the executable file, so that the memory analysis tool can implement offline detection of the memory operations.

Step 504. The memory analysis tool establishes a dynamic analysis model based on a quantity of processing cores used when the executable file is run, and analyzes an unauthorized memory operation.

Specifically, because each processing core has private memory (local memory), the memory analysis tool may establish a corresponding dynamic analysis model for each processing core based on the quantity of processing cores used when the executable file is run, to implement detection of an unauthorized memory operation.

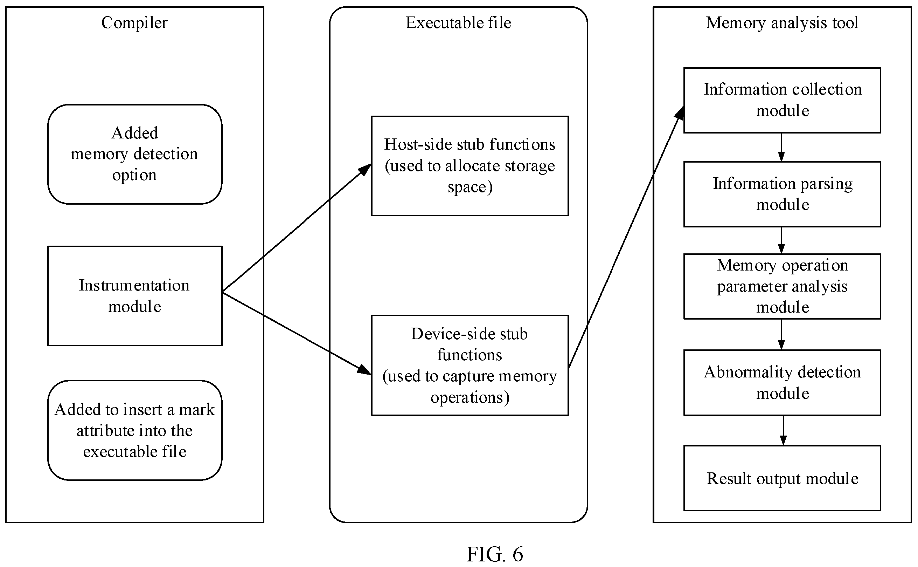

FIG. 6 is a diagram of a system architecture according to an embodiment of this application. As shown in FIG. 6, the system architecture includes a compiler and a memory analysis tool. The compiler is configured to obtain, through compilation, an executable file including stub functions. The memory analysis tool obtains memory operation parameters generated during running of the executable file, and restores memory operations based on the memory operation parameters, to implement offline detection of an unauthorized memory operation.

A memory detection option is added to the compiler. After the memory detection option is enabled, the compiler can be enabled to perform instrumentation on, that is, insert the stub functions used to capture the memory operations into, code that needs to be compiled. An instrumentation module is further added to the compiler, and is configured to insert the corresponding stub functions for memory operation instructions in the code in a compilation process of the code, to capture, by using the stub functions, the memory operations corresponding to the memory operation instructions during execution. In addition, a mark function is further added to the compiler. After the memory detection option is enabled, a mark attribute may be inserted into the generated executable file, to mark that the stub functions are inserted into the executable file and unauthorized memory detection needs to be performed.

The executable file includes host-side stub functions and device-side stub functions. The host-side stub function is used to trigger a CPU on a host side to request, from a device side, a block of storage space used to store a memory operation parameter. That is, the CPU notifies, based on the host-side stub function, an AI DSA on the device side to allocate a block of storage space used to store a memory operation parameter. The device-side stub function is used to capture a memory operation that occurs during execution of the executable file and store a captured memory operation parameter in specific storage space.

The memory analysis tool includes an information collection module, an information parsing module, a memory operation parameter analysis module, an abnormality detection module, and a result output module. The information collection module is configured to collect stub information of the host side and the device side to a detection process. The information parsing module is configured to: parse memory space header information, verify a version number, and the like, to parse the collected stub information. The memory operation parameter analysis module is configured to analyze collected memory operation parameters, and update use statuses recorded in memory space. The abnormality detection module is configured to filter out an abnormal memory operation behavior based on a process performed by the memory operation parameter analysis module, to detect an unauthorized memory operation. The result output module is configured to output the unauthorized memory operation.

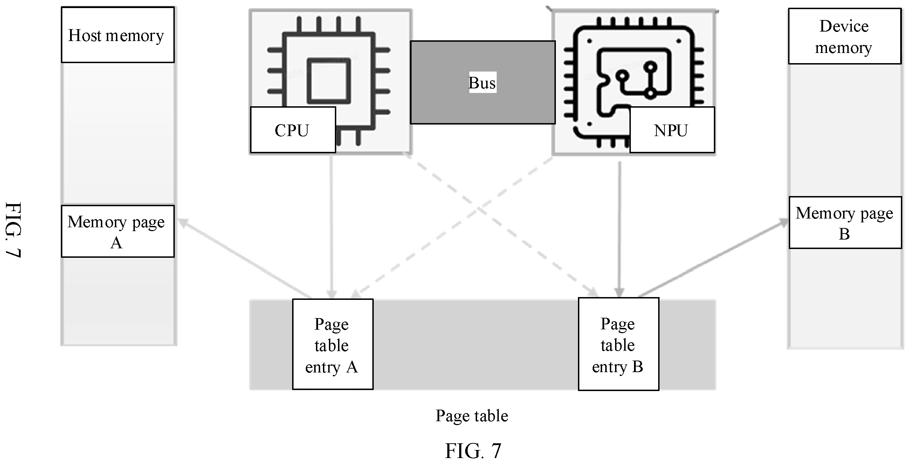

FIG. 7 is a diagram of a heterogeneous platform according to an embodiment of this application. As shown in FIG. 7, the heterogeneous platform includes a CPU and an NPU. The CPU and the NPU are in a primary/secondary relationship, and are also referred to as a host side and a device side. There is memory space jointly accessed by the CPU and the NPU. In addition, memory used by the CPU on the host side is usually referred to as host memory, for example, a double data rate synchronous dynamic random access memory (Double Data Rate Synchronous Dynamic Random Access Memory, DDR). Memory used by the NPU on the device side is usually referred to as device memory, for example, a high bandwidth memory (High Bandwidth Memory, HBM).

In addition, there is usually multi-level memory on the device side: a unified buffer (unified buffer, UB), an L1 memory segment, an L0A memory segment, an L0B memory segment, an L0C memory segment, and the like. An unauthorized operation may exist in access to these memory segments, and these memory segments are memory space that needs to be detected in the method in embodiments.

Specifically, in a process of compiling code, a compiler may implement the following plurality of functions.

### Function 1. Address space derivation.

During compilation of an executable file, memory of any memory segment of a chip (for example, the NPU shown in FIG. 7) of a multi-level memory architecture is requested to be automatically mapped to a segment identifier by using an address space attribute, so that an identifier of the memory segment to which the memory belongs is automatically obtained based on the space attribute during access of the memory.

### Function 2. Multi-level memory allocation.

During compilation of code, the compiler identifies a memory allocation instruction in the code, does not additionally allocate marked memory during object allocation, and obtains a start address identifier and a size of allocated memory. In addition, the compiler provides a secure allocation interface for low-costs memory space. An address start location and a size can be customized based on a chip feature. The low-costs memory space is used to store subsequently captured memory operation parameters.

### Function 3. Memory operation instruction encapsulation.

In a compilation process, a memory copy instruction and a memory access instruction are shielded from a hardware difference, and a start address of a source address, a start address of a destination address, and a configuration parameter are reserved. The start address of the source address and the start address of the destination address may be obtained by using the foregoing function 2, and address space to which the source address and the destination address belong may be obtained according to the foregoing function 1. It is required that the configuration parameter can be used to calculate a length of a source address and a length of a destination address of a memory operation.

### Function 4. Memory operation instruction capture.

During compilation, the compiler may obtain a preset capture instruction list or a capture instruction list provided by a target capture instruction interface, and insert stub functions for capturing memory operations into corresponding locations based on insertion locations described by capture instructions. In this way, during running of the executable file, the stub function may be used to capture parameter information in a memory operation instruction, and obtain address space of memory operated by using the memory operation instruction and an identifier of a processing core executing the current memory operation instruction. The captured parameter information is stored in specified memory space during running of the stub function. In addition, during running of the stub function, it is analyzed, based on the address space of the memory operated by using the memory operation instruction, whether an operation is performed on shared memory; and if an operation is performed on the shared memory, execution time of the memory operation instruction is also captured.

### Function 5. Memory operation log management.

A specified segment of memory space is allocated in the low-costs memory space through the secure allocation interface, of the low-costs memory space, provided in the foregoing function 2, and a start address of the specified memory space is transferred to the AI DSA. In this way, during running, the AI DSA may allocate a specified block of memory space based on a configuration of the secure allocation interface, and perform equal allocation based on a quantity of used processing cores. Memory operation parameters generated by different processing cores are written to corresponding segments, and there is no contention relationship between segments.

### Function 6. Target capture instruction interface design.

The target capture instruction interface may be used to provide an external capture instruction list for the compiler. The capture instruction list may be provided by a user or a vendor, and content of the capture instruction list includes types of instructions for which stub functions need to be inserted, attribute descriptions of stub function insertion locations, whether to capture execution time, and the like.

In summary, the heterogeneous platform shown in FIG. 7 is used as an example. When the compiler compiles an executable file executed on an NPU side, if the compiler enables a memory detection function, the compiler inserts stub functions in front of or behind memory operation instructions in intermediate code during compilation of the intermediate code, and adds a flag bit related to memory detection to an executable file finally obtained through compilation, to indicate that the executable file supports memory detection.

In this way, after obtaining the executable file, the CPU of the heterogeneous platform may check whether the executable file has the flag bit related to memory detection. If the executable file has the flag bit related to memory detection, the CPU allocates, based on a quantity of processing cores in the NPU, specified memory space in low-costs memory used by the NPU, and the specified memory space is equally allocated to a plurality of processing cores.

Then, the CPU serializes start address and length information of the allocated specified memory space into a character string, and transfers the character string to the NPU in a form of a parameter. Each processing core in the NPU stores, in a reserved stack in the core, memory space allocated to the processing core. In addition, the CPU further transfers the executable file to the NPU, to indicate the NPU to execute the executable file, to execute an operation task.

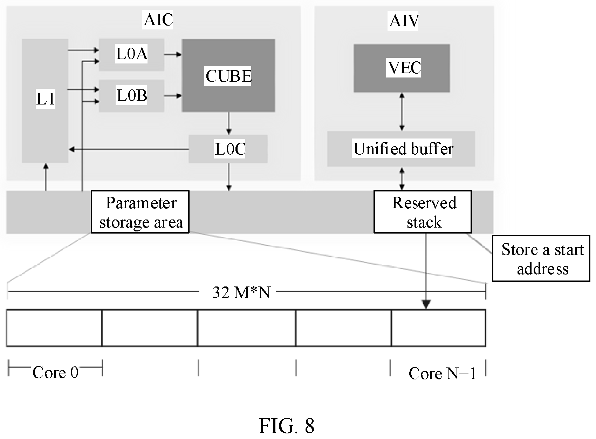

For example, FIG. 8 is a diagram of a parameter storage area according to an embodiment of this application. As shown in FIG. 8, when an NPU has N processing cores, a 32-megabyte (MB) parameter storage area is allocated to each processing core, and is used to store a memory operation parameter obtained by the processing core. In addition, each processing core stores start address and length information of the parameter storage area in a reserved stack of the processing core, to determine a location of the parameter storage area. In addition, each processing core has a plurality of memory segments: a unified buffer (unified buffer, UB), an L1 memory segment, an L0A memory segment, an L0B memory segment, and an L0C memory segment.

In a running process of an executable file, the NPU stores, in allocated memory space one by one, memory operation parameters captured by using stub functions, to subsequently perform memory analysis based on these memory operation parameters.

The foregoing describes the compilation process of the executable file, and the following continues to describe a process of unauthorized memory detection.

First, a CPU needs to pull memory operation parameters on a device side. Specifically, a listening stub is inserted at an end location of an executable file. Therefore, when the executable file is terminated, the CPU may obtain, through listening, information indicating that running of the executable file ends. In this way, when the CPU learns, through listening, that running of the executable file ends, the CPU copies the memory operation parameters in specified memory space on the device side to memory used on a CPU side. Before running of the executable file, the CPU may obtain a total size of memory of segments in a processing core and a total size of shared memory.

In a process of detecting memory-in-segment on the device side, the CPU independently establishes a detection model for a memory operation parameter of each processing core. Specifically, the CPU establishes, in host memory, mapped memory having a same size and a correspondence with memory-in-segment of the processing core on the device side, and records a mapping relationship between a start address of the mapped memory and a start address of the detected memory. The last 2 bits (bit) of each byte in the mapped memory represent a status of 1-byte memory in the detected memory. That is, the mapped memory records a use status of 1-byte memory in the detected memory by using 2 bits. The memory has four use statuses in total: an unallocated state, an allocated but uninitialized state, an allocated and initialized state, and an error state. When a value of the 2 bits is 0, it indicates that the use status is the unallocated state; when a value of the 2 bits is 1, it indicates that the use status is the allocated but uninitialized state; when a value of the 2 bits is 2, it indicates that the use status is the allocated and initialized state; and when a value of the 2 bits is 3, it indicates that the use status is the error state. Certainly, a size ratio of the mapped memory to the detected memory may be alternatively another ratio, for example, 2:8. This is not specifically limited herein.

Memory operation parameters of all processing cores are sequentially analyzed based on a storage sequence of the memory operation parameters. Specifically, if a memory operation indicated by a memory operation parameter is a memory allocation operation, a location of corresponding mapped memory is found based on a mapping relationship, and a status is updated to allocated but uninitialized. If a memory operation indicated by a memory operation parameter is a memory access operation, after it is checked, based on a destination address indicated by the memory operation parameter, that a status in mapped memory corresponding to detected memory is authorized, the use status in the mapped memory is updated. If it is detected that all of the mapped memory is in an unallocated or error state, information about an erroneous memory address is recorded and an unrequested access error is reported. If it is detected that a part of the mapped memory is in an unallocated state, an out-of-bounds memory access error is reported. If it is detected that the mapped memory is in an allocated but uninitialized state, an alarm is reported.

For a memory copy instruction and a calculation-type memory access instruction, when a status in mapped memory is detected, start address detection further needs to be performed according to an access alignment requirement of a memory segment. If the access alignment requirement is not met, an address-unaligned access error is reported.

Similarly, in a detection process for the shared memory on the device side, an analysis model of a dynamic ratio is established based on a quantity of processing cores that run the executable file. Sixty-four processing cores are used as an example. Each 1B of mapped memory corresponds to 1B of physical memory on the device side, the first 6 bits of 1B of the mapped memory indicate a specific processing core that operates memory space in the shared memory, and the last 2 bits indicate a status of 1B memory space in the shared memory. The shared memory has four use statuses in total: an unallocated state, an allocated but uninitialized state, an allocated and initialized state, and an error state. In addition, the shared memory is divided into blocks of 64 KB each, to establish a mapping relationship between the mapped memory and the shared memory on the device side. During specific analysis, instructions are sorted based on execution time of the instructions, destination addresses and processing core identifiers in memory operation parameters are sequentially analyzed, and statuses in mapped memory are updated to determine access authority. If a processing core of a current write operation is different from a processing core of a previous write operation at a same address of the shared memory, an inter-core corruption alarm is reported. If out-of-bounds read/write access occurs or a read/write operation is performed on a location that is not readable or writable, a read/write abnormality error is reported.

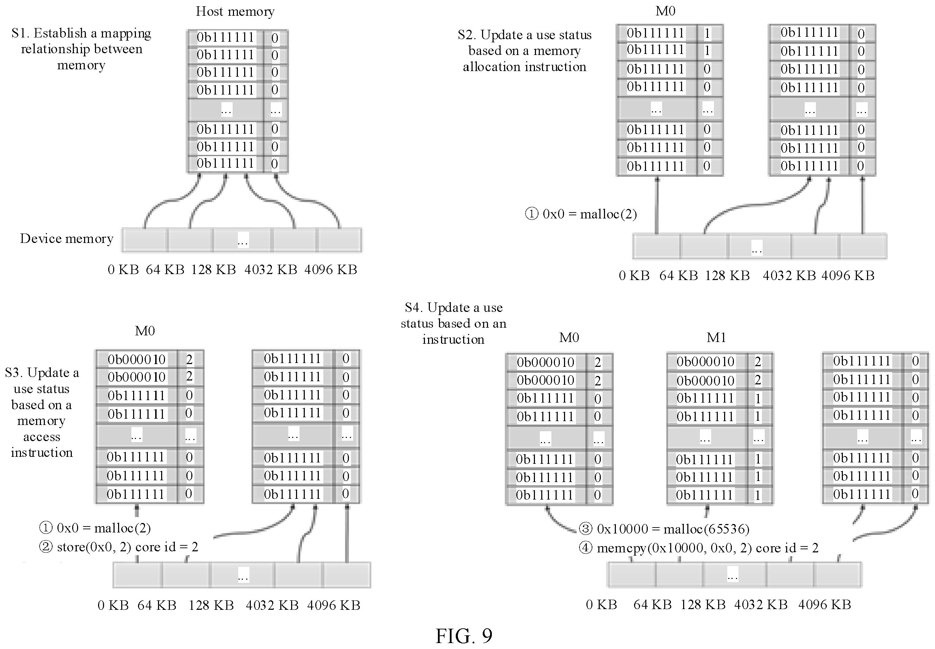

For example, FIG. 9 is a diagram of memory analysis according to an embodiment of this application. As shown in FIG. 9, in step S1, for detected device memory, a corresponding piece of memory may be obtained by dividing host memory in advance, to establish a mapping relationship between the detected device memory and the host memory. The memory corresponding to the detected device memory in the host memory may be referred to as mapped memory, and the mapped memory is used to record a use status of the corresponding device memory. The device memory is divided in units of 64 KB, that is, divided into blocks of 64 KB each. In this way, the mapped memory is also divided in the device memory division manner, to obtain a mapped memory block M0, a mapped memory block M1, ..., and a mapped memory block Mn.

In step S2, a use status recorded in a mapped memory block is updated based on a destination address and a memory operation type that are indicated by a memory operation parameter. Specifically, based on a memory operation parameter, it can be learned that a memory operation instruction is a memory allocation instruction (0x0 = malloc(2)), and a memory allocation destination address is first 2B. Therefore, based on the memory operation parameter, a use status recorded in first 2B in the mapped memory block M0 may be updated to 1, namely, an allocated but uninitialized state.

In step S3, based on step S2, a use status recorded in a mapped memory block continues to be updated based on a destination address and a memory operation type that are indicated by a memory operation parameter. Specifically, based on a next memory operation parameter, it can be learned that a memory operation instruction is a memory write instruction (store(0x0, 2) core id = 2), and a memory access destination address is first 2B. Therefore, based on the memory operation parameter, a use status recorded in first 2B in the mapped memory block M0 may be updated to 2, namely, an allocated and initialized state.

In step S4, based on step S3, a use status recorded in a mapped memory block continues to be updated based on a destination address and a memory operation type that are indicated by a memory operation parameter. Specifically, based on two subsequent memory operation parameters, it can be learned that two subsequent memory operation instructions are respectively a memory allocation instruction (0x10000 = malloc(65536)) and a memory copy instruction (memcpy(0x10000, 0x0, 2) core id = 2). Therefore, based on the two memory operation parameters, first, use statuses recorded in all bytes in the mapped memory block M1 may be updated to 1, namely, an allocated but uninitialized state; and then use statuses recorded in first 2B in the mapped memory block M1 are updated to 2, namely, an allocated and initialized state.

The foregoing describes in detail the methods provided in embodiments of this application. The following describes devices, configured to perform the foregoing methods, provided in embodiments of this application.

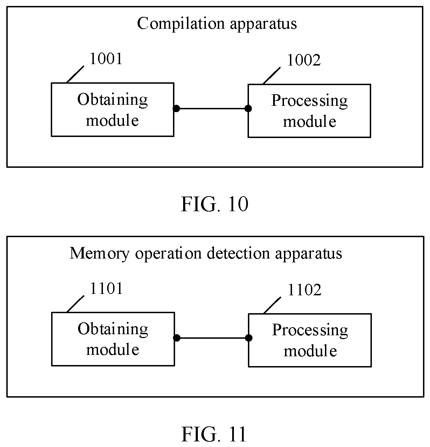

FIG. 10 is a diagram of a structure of a compilation apparatus according to an embodiment of this application. As shown in FIG. 10, the compilation apparatus provided in this embodiment of this application includes: an obtaining module 1001, configured to obtain first code, where the first code includes a plurality of memory operation instructions; and a processing module 1002, configured to insert a plurality of stub functions into the first code based on locations of the plurality of memory operation instructions in the first code to obtain second code, where the plurality of stub functions are used to capture memory operations performed by using the plurality of memory operation instructions and store a plurality of captured memory operation parameters in first storage space, and the plurality of memory operation parameters are used to restore the memory operations performed by using the plurality of memory operation instructions.

In a possible implementation, the plurality of memory operation instructions include instructions of one or more of the following types: a memory allocation instruction, a memory copy instruction, a memory access instruction, or a memory release instruction.

In a possible implementation, the plurality of memory operation parameters include destination addresses of the memory operations and types of the memory operations.

In a possible implementation, target memory operation parameters in the plurality of memory operation parameters further include execution time of memory operations, the memory operations indicated by the target memory operation parameters are operations performed on shared memory, the shared memory is memory accessible to different processing cores, and different storage space is allocated to the different processing cores in the shared memory.

In a possible implementation, the obtaining module 1001 is further configured to obtain a capture instruction list, where the capture instruction list indicates types of memory operation instructions for which stub functions need to be inserted and stub function insertion locations; the processing module 1002 is further configured to identify the plurality of memory operation instructions in the first code based on the capture instruction list; and the processing module 1002 is further configured to insert a corresponding stub function into the first code for each memory operation instruction based on the stub function insertion locations indicated by the capture instruction list and a location of each of the plurality of memory operation instructions in the first code.

In a possible implementation, the second code is used to obtain, through compilation, an executable file that is run on an AI DSA of a heterogeneous platform, and the heterogeneous platform includes a central processing unit CPU and the AI DSA.

In a possible implementation, the AI DSA includes one or more types of the following hardware: a GPU, an NPU, or an FPGA.

FIG. 11 is a diagram of a structure of a memory operation detection apparatus according to an embodiment of this application. As shown in FIG. 11, the memory operation detection apparatus provided in this embodiment of this application includes: an obtaining module 1101, configured to obtain a plurality of memory operation parameters, where each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file; and sequentially restore, in an execution sequence of the plurality of memory operation instructions based on the plurality of memory operation parameters, the memory operations performed by using the plurality of memory operation instructions, to detect an unauthorized memory operation that occurs in execution processes of the plurality of memory operation instructions.

In a possible implementation, the plurality of memory operation instructions include instructions of one or more of the following types: a memory allocation instruction, a memory copy instruction, a memory access instruction, or a memory release instruction.

In a possible implementation, the plurality of memory operation parameters include destination addresses of the memory operations and types of the memory operations.

In a possible implementation, the plurality of memory operation parameters include memory operation parameters generated by different processing cores, and the memory operation parameters generated by the different processing cores are stored in different storage areas. Target memory operation parameters in the plurality of memory operation parameters further include execution time of memory operations, the memory operations indicated by the target memory operation parameters are operations performed on shared memory, the shared memory is memory accessible to different processing cores, different storage space is allocated to the different processing cores in the shared memory, and the execution time of the memory operations is used to determine a memory operation restoration sequence of the target memory operation parameters.

In a possible implementation, the processing module 1102 is further configured to: determine second memory space based on first memory space indicated by a first memory operation parameter, where the first memory operation parameter is any one of the plurality of memory operation parameters, the first memory space is an operation object of a memory operation indicated by the first memory operation parameter, the second memory space has a correspondence with the first memory space, and the second memory space is used to record a use status of the first memory space; update, based on a type of the memory operation indicated by the first memory operation parameter, the use status recorded in the second memory space; and before updating the use status recorded in the second memory space, generate an unauthorized operation notification if the memory operation indicated by the first memory operation parameter and the use status recorded in the second memory space meet a preset condition, where the unauthorized operation notification indicates that the memory operation indicated by the first memory operation parameter is an unauthorized memory operation.

In a possible implementation, the processing module 1102 is further configured to: if the memory operation indicated by the first memory operation parameter is a memory access operation and the use status recorded in the second memory space is an unallocated state or an error state, generate an unauthorized operation notification indicating that a type of an unauthorized memory operation is unrequested access; or if the memory operation indicated by the first memory operation parameter is a memory access operation and a use status recorded in a part of the second memory space is an unallocated state, generate an unauthorized operation notification indicating that a type of an unauthorized memory operation is out-of-bounds memory access.

In a possible implementation, the processing module 1102 is further configured to: if the memory operation indicated by the first memory operation parameter is a write operation of a first processing core for the shared memory and the use status in the second memory space is recorded based on a write operation of a second processing core for the shared memory, generate an unauthorized operation notification indicating that a type of an unauthorized memory operation is inter-core corruption.

In a possible implementation, the first memory space is memory space used by an AI DSA of a heterogeneous platform, and the second memory space is memory space used by a CPU of the heterogeneous platform.

In a possible implementation, the obtaining module 1101 is further configured to: after execution of the executable file is completed, read the plurality of memory operation parameters from first storage space used by the AI DSA of the heterogeneous platform, where the plurality of memory operation parameters are generated and stored in the first storage space by the AI DSA during running of the executable file.

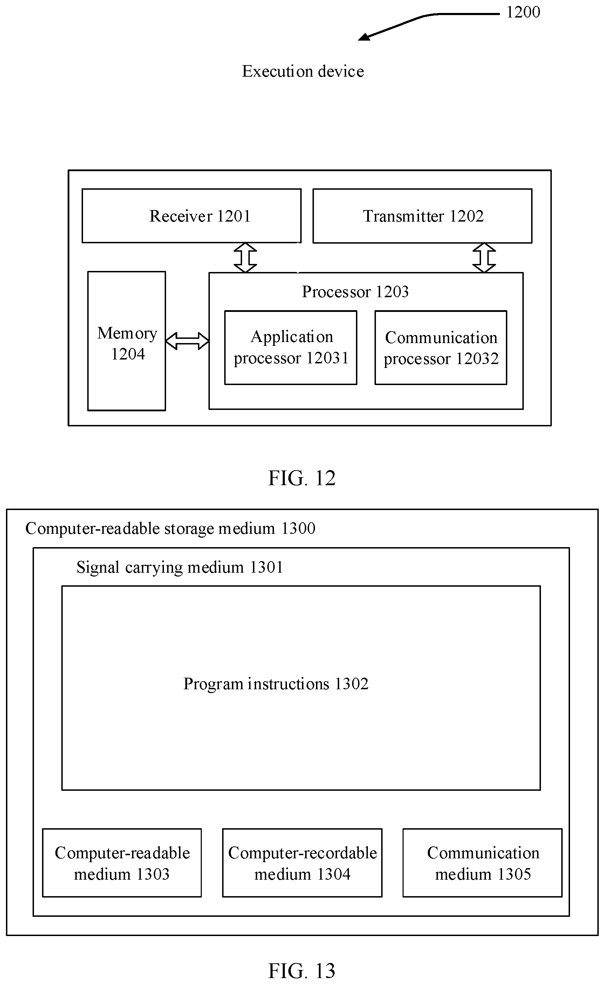

FIG. 12 is a diagram of a structure of an execution device according to an embodiment of this application. As shown in FIG. 12, the execution device 1200 is configured to perform the compilation method or the memory operation detection method described in the foregoing embodiments, and the execution device 1200 may be specifically represented as a server. This is not limited herein. Specifically, the execution device 1200 includes a receiver 1201, a transmitter 1202, a processor 1203, and a memory 1204 (there may be one or more processors 1203 in the execution device 1200, and one processor is used as an example in FIG. 12). The processor 1203 may include an application processor 12031 and a communication processor 12032. In some embodiments of this application, the receiver 1201, the transmitter 1202, the processor 1203, and the memory 1204 may be connected through a bus or in another manner.

The memory 1204 may include a read-only memory and a random access memory, and provide instructions and data for the processor 1203. A part of the memory 1204 may further include a non-volatile random access memory (non-volatile random access memory, NVRAM). The memory 1204 stores a processor and operation instructions, an executable module, or a data structure; a subset thereof; or an extended set thereof. The operation instructions may include various operation instructions, used to implement various operations.

The processor 1203 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are referred to as the bus system.

The methods disclosed in embodiments of this application may be applied to the processor 1203, or may be implemented by the processor 1203. The processor 1203 may be an integrated circuit chip with a signal processing capability. In an implementation process, the steps in the foregoing methods may be implemented by using a hardware integrated logical circuit in the processor 1203, or instructions in a form of software. The processor 1203 may be a general-purpose processor, a digital signal processor (digital signal processing, DSP), a microprocessor, or a microcontroller. The processor 1203 may further include an application-specific integrated circuit (application-specific integrated circuit, ASIC), a field programmable gate array (field programmable gate array, FPGA) or another programmable logic device, a discrete gate or transistor logic device, or a discrete hardware component.

The processor 1203 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1204, and the processor 1203 reads information in the memory 1204 and completes the steps in the foregoing methods in combination with hardware in the processor.

The receiver 1201 may be configured to: receive input digit or character information, and generate signal input related to relevant setting and function control of the execution device. The transmitter 1202 may be configured to output digit or character information through a first interface. The transmitter 1202 may be further configured to send an instruction to a disk group through the first interface, to modify data in the disk group. The transmitter 1202 may further include a display device such as a display.

The execution device provided in this embodiment of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, to enable a chip in the execution device to perform the methods described in the foregoing embodiments. Optionally, the storage unit is a storage unit in the chip, for example, a register or a buffer. Alternatively, the storage unit may be a storage unit in a wireless access device end but outside the chip, for example, a read-only memory (read-only memory, ROM), another type of static storage device that can store static information and instructions, or a random access memory (random access memory, RAM).

FIG. 13 is a diagram of a structure of a computer-readable storage medium according to an embodiment of this application. This application further provides the computer-readable storage medium. In some embodiments, the method disclosed in FIG. 3 or FIG. 4 may be implemented as computer program instructions encoded on the computer-readable storage medium or encoded on another non-transitory medium or product in a machine-readable format.

FIG. 13 schematically shows a conceptual partial view of an example computer-readable storage medium arranged according to at least some embodiments shown herein, and the example computer-readable storage medium includes a computer program for executing a computer process on a compute device.

In an embodiment, the computer-readable storage medium 1300 is provided by using a signal carrying medium 1301. The signal carrying medium 1301 may include one or more program instructions 1302. When the program instructions are run by one or more processors, the functions or some functions described for FIG. 3 or FIG. 4 may be provided.

In some examples, the signal carrying medium 1301 may include a computer-readable medium 1303, for example, but not limited to, a hard disk drive, a compact disc (CD), a digital video disc (DVD), a digital tape, a storage, a ROM, or a RAM.

In some implementations, the signal carrying medium 1301 may include a computer-recordable medium 1304, for example, but not limited to, a storage, a read/write (R/W) CD, or an R/W DVD. In some implementations, the signal carrying medium 1301 may include a communication medium 1305, for example, but not limited to, a digital and/or analog communication medium (for example, an optical fiber, a waveguide, a wired communication link, or a wireless communication link). Therefore, for example, the signal carrying medium 1301 may be conveyed by the communication medium 1305 in a wireless form (for example, a wireless communication medium that complies with the IEEE 802.X standard or another transmission protocol).

The one or more program instructions 1302 may be, for example, computer-executable instructions or logic implementation instructions. In some examples, the compute device of the compute device may be configured to provide various operations, functions, or actions in response to the program instructions 1302 conveyed to the compute device by using one or more of the computer-readable medium 1303, the computer-recordable medium 1304, and/or the communication medium 1305.

In addition, it should be noted that the apparatus embodiments described above are merely examples. Units described as separate parts may or may not be physically separate, and parts displayed as units may or may not be physical units, that is, may be located at one place, or may be distributed on a plurality of network units. Some or all of the modules may be selected according to actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the foregoing descriptions of the implementations, a person skilled in the art may clearly understand that this application may be implemented by software and necessary universal hardware, or may be certainly implemented by dedicated hardware, including an application-specific integrated circuit, a dedicated CPU, a dedicated storage, a dedicated component, or the like. Usually, any function completed by a computer program can be easily implemented by corresponding hardware. Moreover, specific hardware structures used to achieve a same function may be in various forms, for example, an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by software, hardware, firmware, or any combination thereof. When software is used to implement the foregoing embodiments, all or some of the foregoing embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium accessible to a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A compilation method, comprising:
obtaining first code, wherein the first code comprises a plurality of memory operation instructions; and
inserting a plurality of stub functions into the first code based on locations of the plurality of memory operation instructions in the first code to obtain second code, wherein the plurality of stub functions are used to capture memory operations performed by using the plurality of memory operation instructions and store a plurality of captured memory operation parameters in first storage space, and the plurality of memory operation parameters are used to restore the operations performed by using the plurality of memory operation instructions.

2. The method according to claim 1, wherein the plurality of memory operation instructions comprise instructions of one or more of the following types: a memory allocation instruction, a memory copy instruction, a memory access instruction, or a memory release instruction.

3. The method according to claim 1 or 2, wherein the plurality of memory operation parameters comprise destination addresses of the memory operations and types of the memory operations.

4. The method according to any one of claims 1 to 3, wherein target memory operation parameters in the plurality of memory operation parameters further comprise execution time of memory operations, the memory operations indicated by the target memory operation parameters are operations performed on shared memory, the shared memory is memory accessible to different processing cores, and different storage space is allocated to the different processing cores in the shared memory.

5. The method according to any one of claims 1 to 4, wherein the method further comprises:
obtaining a capture instruction list, wherein the capture instruction list indicates types of memory operation instructions for which stub functions need to be inserted and stub function insertion locations; and
the inserting the plurality of stub functions into the first code based on the locations of the plurality of memory operation instructions in the first code comprises:
identifying the plurality of memory operation instructions in the first code based on the capture instruction list; and
inserting a corresponding stub function into the first code for each memory operation instruction based on the stub function insertion locations indicated by the capture instruction list and a location of each of the plurality of memory operation instructions in the first code.

6. The method according to any one of claims 1 to 5, wherein the second code is used to obtain, through compilation, an executable file that is run on an artificial intelligence AI domain special architecture DSA of a heterogeneous platform, and the heterogeneous platform comprises a central processing unit CPU and the AI DSA.

7. The method according to claim 6, wherein the AI DSA comprises one or more types of the following hardware: a graphics processing unit GPU, a neural network processing unit NPU, or a field programmable gate array FPGA.

8. A memory operation detection method, comprising:
obtaining a plurality of memory operation parameters, wherein each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file; and
sequentially restoring, in an execution sequence of the plurality of memory operation instructions based on the plurality of memory operation parameters, the memory operations performed by using the plurality of memory operation instructions, to detect an unauthorized memory operation that occurs in execution processes of the plurality of memory operation instructions.

9. The method according to claim 8, wherein the plurality of memory operation instructions comprise instructions of one or more of the following types: a memory allocation instruction, a memory copy instruction, a memory access instruction, or a memory release instruction.

10. The method according to claim 8 or 9, wherein the plurality of memory operation parameters comprise destination addresses of the memory operations and types of the memory operations.

11. The method according to any one of claims 8 to 10, wherein the plurality of memory operation parameters comprise memory operation parameters generated by different processing cores, and the memory operation parameters generated by the different processing cores are stored in different storage areas; and
target memory operation parameters in the plurality of memory operation parameters further comprise execution time of memory operations, the memory operations indicated by the target memory operation parameters are operations performed on shared memory, the shared memory is memory accessible to different processing cores, different storage space is allocated to the different processing cores in the shared memory, and the execution time of the memory operations is used to determine a memory operation restoration sequence of the target memory operation parameters.

12. The method according to any one of claims 8 to 11, wherein the sequentially restoring, based on the plurality of memory operation parameters, the memory operations performed by using the plurality of memory operation instructions comprises:
determining second memory space based on first memory space indicated by a first memory operation parameter, wherein the first memory operation parameter is any one of the plurality of memory operation parameters, the first memory space is an operation object of a memory operation indicated by the first memory operation parameter, the second memory space has a correspondence with the first memory space, and the second memory space is used to record a use status of the first memory space;
updating, based on a type of the memory operation indicated by the first memory operation parameter, the use status recorded in the second memory space; and
before updating the use status recorded in the second memory space, generating an unauthorized operation notification if the memory operation indicated by the first memory operation parameter and the use status recorded in the second memory space meet a preset condition, wherein the unauthorized operation notification indicates that the memory operation indicated by the first memory operation parameter is an unauthorized memory operation.

13. The method according to claim 12, wherein the generating the unauthorized operation notification if the memory operation indicated by the first memory operation parameter and the use status recorded in the second memory space meet the preset condition comprises:
if the memory operation indicated by the first memory operation parameter is a memory access operation and the use status recorded in the second memory space is an unallocated state or an error state, generating an unauthorized operation notification indicating that a type of an unauthorized memory operation is unrequested access; or
if the memory operation indicated by the first memory operation parameter is a memory access operation and a use status recorded in a part of the second memory space is an unallocated state, generating an unauthorized operation notification indicating that a type of an unauthorized memory operation is out-of-bounds memory access.

14. The method according to claim 12 or 13, wherein the generating the unauthorized operation notification if the memory operation indicated by the first memory operation parameter and the use status recorded in the second memory space meet the preset condition comprises:
if the memory operation indicated by the first memory operation parameter is a write operation of a first processing core for the shared memory and the use status in the second memory space is recorded based on a write operation of a second processing core for the shared memory, generating an unauthorized operation notification indicating that a type of an unauthorized memory operation is inter-core corruption.

15. The method according to any one of claims 12 to 14, wherein the first memory space is memory space used by an AI DSA of a heterogeneous platform, and the second memory space is memory space used by a CPU of the heterogeneous platform.

16. The method according to any one of claims 8 to 15, wherein the obtaining the plurality of memory operation parameters comprises:
after execution of the executable file is completed, reading the plurality of memory operation parameters from first storage space used by the AI DSA of the heterogeneous platform, wherein the plurality of memory operation parameters are generated and stored in the first storage space by the AI DSA during running of the executable file.

17. A compilation apparatus, comprising:
an obtaining module, configured to obtain first code, wherein the first code comprises a plurality of memory operation instructions; and
a processing module, configured to insert a plurality of stub functions into the first code based on locations of the plurality of memory operation instructions in the first code to obtain second code, wherein the plurality of stub functions are used to capture memory operations performed by using the plurality of memory operation instructions and store a plurality of captured memory operation parameters in first storage space, and the plurality of memory operation parameters are used to restore the operations performed by using the plurality of memory operation instructions.

18. The apparatus according to claim 17, wherein the plurality of memory operation instructions comprise instructions of one or more of the following types: a memory allocation instruction, a memory copy instruction, a memory access instruction, or a memory release instruction.

19. The apparatus according to claim 17 or 18, wherein the plurality of memory operation parameters comprise destination addresses of the memory operations and types of the memory operations.

20. The apparatus according to any one of claims 17 to 19, wherein target memory operation parameters in the plurality of memory operation parameters further comprise execution time of memory operations, the memory operations indicated by the target memory operation parameters are operations performed on shared memory, the shared memory is memory accessible to different processing cores, and different storage space is allocated to the different processing cores in the shared memory.

21. The apparatus according to any one of claims 17 to 20, wherein
the obtaining module is further configured to obtain a capture instruction list, wherein the capture instruction list indicates types of memory operation instructions for which stub functions need to be inserted and stub function insertion locations;
the processing module is further configured to identify the plurality of memory operation instructions in the first code based on the capture instruction list; and
the processing module is further configured to insert a corresponding stub function into the first code for each memory operation instruction based on the stub function insertion locations indicated by the capture instruction list and a location of each of the plurality of memory operation instructions in the first code.

22. A memory operation detection apparatus, comprising:
an obtaining module, configured to obtain a plurality of memory operation parameters, wherein each of the plurality of memory operation parameters indicates a memory operation corresponding to a memory operation instruction during execution, the plurality of memory operation parameters are obtained by capturing, by using a plurality of stub functions, memory operations performed by using a plurality of memory operation instructions, and the plurality of stub functions and the plurality of memory operation instructions are located in a same executable file; and
sequentially restore, based on the plurality of memory operation parameters, the memory operations performed by using the plurality of memory operation instructions, to detect an unauthorized memory operation that occurs in execution processes of the plurality of memory operation instructions.

23. The apparatus according to claim 22, wherein the processing module is further configured to:
determine second memory space based on first memory space indicated by a first memory operation parameter, wherein the first memory operation parameter is any one of the plurality of memory operation parameters, the first memory space is an operation object of a memory operation indicated by the first memory operation parameter, the second memory space has a correspondence with the first memory space, and the second memory space is used to record a use status of the first memory space;
update, based on a type of the memory operation indicated by the first memory operation parameter, the use status recorded in the second memory space; and
before updating the use status recorded in the second memory space, generate an unauthorized operation notification if the memory operation indicated by the first memory operation parameter and the use status recorded in the second memory space meet a preset condition, wherein the unauthorized operation notification indicates that the memory operation indicated by the first memory operation parameter is an unauthorized memory operation.

24. The apparatus according to claim 23, wherein the processing module is further configured to:
if the memory operation indicated by the first memory operation parameter is a memory access operation and the use status recorded in the second memory space is an unallocated state or an error state, generate an unauthorized operation notification indicating that a type of an unauthorized memory operation is unrequested access; or
if the memory operation indicated by the first memory operation parameter is a memory access operation and a use status recorded in a part of the second memory space is an unallocated state, generate an unauthorized operation notification indicating that a type of an unauthorized memory operation is out-of-bounds memory access.

25. The apparatus according to claim 23 or 24, wherein the processing module is further configured to:
if the memory operation indicated by the first memory operation parameter is a write operation of a first processing core for the shared memory and the use status in the second memory space is recorded based on a write operation of a second processing core for the shared memory, generate an unauthorized operation notification indicating that a type of an unauthorized memory operation is inter-core corruption.

26. A compilation apparatus, comprising a memory and a processor, wherein the memory stores code, the processor is configured to execute the code, and when the code is executed, the apparatus performs the method according to any one of claims 1 to 7.

27. A memory operation detection apparatus, comprising a memory and a processor, wherein the memory stores code, the processor is configured to execute the code, and when the code is executed, the apparatus performs the method according to any one of claims 8 to 16.

28. A computer storage medium, wherein the computer storage medium stores instructions, and when the instructions are executed by a computer, the computer is enabled to implement the method according to any one of claims 1 to 16.

29. A computer program product, wherein the computer program product stores instructions, and when the instructions are executed by a computer, the computer is enabled to implement the method according to any one of claims 1 to 16.
